# EUROPÄISCHE PATENTANMELDUNG

(11) **EP 0 937 404 A2**
(43) Veröffentlichungstag der Anmeldung: **25.08.1999**
(21) Anmeldenummer: 99103370.5
(22) Anmeldetag: 22.02.1999
(51) Int. Cl.: A22C 11/12

(54) **Wurstschlaufenabschneider**

(30) Priorität: 20.02.1998 DE 29802978 U
(71) Anmelder: Inotec GmbH, 72770 Reutlingen-Betzingen (DE)
(72) Erfinder: Borchers, Uwe, 28309 Bremen (DE)
(74) Vertreter: Heiland, Karsten, Dipl.-Ing.

(57) **Zusammenfassung**

Die Erfindung betrifft eine automatische Vorrichtung zum Abschneiden von Wurststrängen, die mittels Schlaufen an einem Wurststock hängen. In einer Arbeitsstation fährt ein Schneidenkopf in Längsrichtung des Wurststockes knapp über die Enden der Würste und durchtrennt die Schlaufen. Hierbei dient ein quer zur Zuführungsbewegung gespannter Zahnriemen einerseits als Führung und reibschlüssige Halterung für die Schlaufen und andererseits als feststehendes Element zum Antrieb der Rundschneiden des sich vorwärtsbewegenden Schneidenkopfes.

## Beschreibung

Die Erfindung betrifft einen Wurstschlaufenabschneider. Bei der fabrikmäßigen Herstellung von Würsten werden diese zu kettenartigen Strängen geformt. Die entstehenden Wurststränge werden über endseitige Schlaufen an sogenannte Wurststöcke gehängt. Dabei nimmt ein Wurststock mehrere Wurststränge auf. Vor der Vereinzelung der Würste und der Weiterverarbeitung derselben ist das Trennen der Wurststränge von dem jeweiligen Wurststock erforderlich. Hierzu werden die Schlaufen bislang manuell durchgeschnitten. Es ist Aufgabe der vorliegenden Erfindung, die Verarbeitung in diesem Bereich zu vereinfachen und zu automatisieren.

Die erfindungsgemäße Vorrichtung weist eine Schneidvorrichtung zum Abschneiden der Wurststränge auf, die mittels Schlaufen an einem Wurststock hängen. Die Idee der Erfindung besteht somit in der Bereitstellung einer automatischen Vorrichtung zur Handhabung von Wurststöcken und zum Abschneiden der Wurststränge bzw. zum Abschneiden der Schlaufen. Vorteilhafterweise werden die abgetrennten Schlaufen abgesaugt oder abgebürstet. Die abgetrennten Wurststränge werden abtransportiert und der weiteren Verarbeitung zugeführt, insbesondere über ein Transportband.

Von besonderer Bedeutung ist der Aufbau der Schneidvorrichtung. Diese weist eine Schneideeinheit mit einem Schneidenkopf auf, der relativ zu den Wurststrängen und entlang einem Wurststock bewegbar ist. Vorgesehene drehende Schneiden am Schneidenkopf erfassen und durchtrennen die Schlaufen. Dabei werden die Schlaufen zwischen einem Zahnriemen und einer Zahnriemenumlenkung eingezogen bzw. eingeklemmt, so daß ein sicheres Abtrennen der Schlaufen gewährleistet ist.

Die Schneideeinheit wird relativ zum Zahnriemen bewegt. Die Relativbewegung wird zugleich genutzt als Antrieb für die rotierenden Schneiden. Letztere werden über eine Achse angetrieben mittels der Drehbewegung von am Zahnriemen anliegenden Umlenkrollen.

Weitere Merkmale der Erfindung ergeben sich aus den Ansprüchen. Ausführungsbeispiele der Erfindung werden nachfolgend anhand von Zeichnungen näher erläutert. Es zeigen:
- Fig. 1: eine Seitenansicht einer erfindungsgemäßen Vorrichtung,
- Fig. 2: eine Vorderansicht der selben Vorrichtung,
- Fig. 3: eine Draufsicht der selben Vorrichtung,
- Fig. 4: eine gegenüber Fig. 1 vergrößerte Seitenansicht,

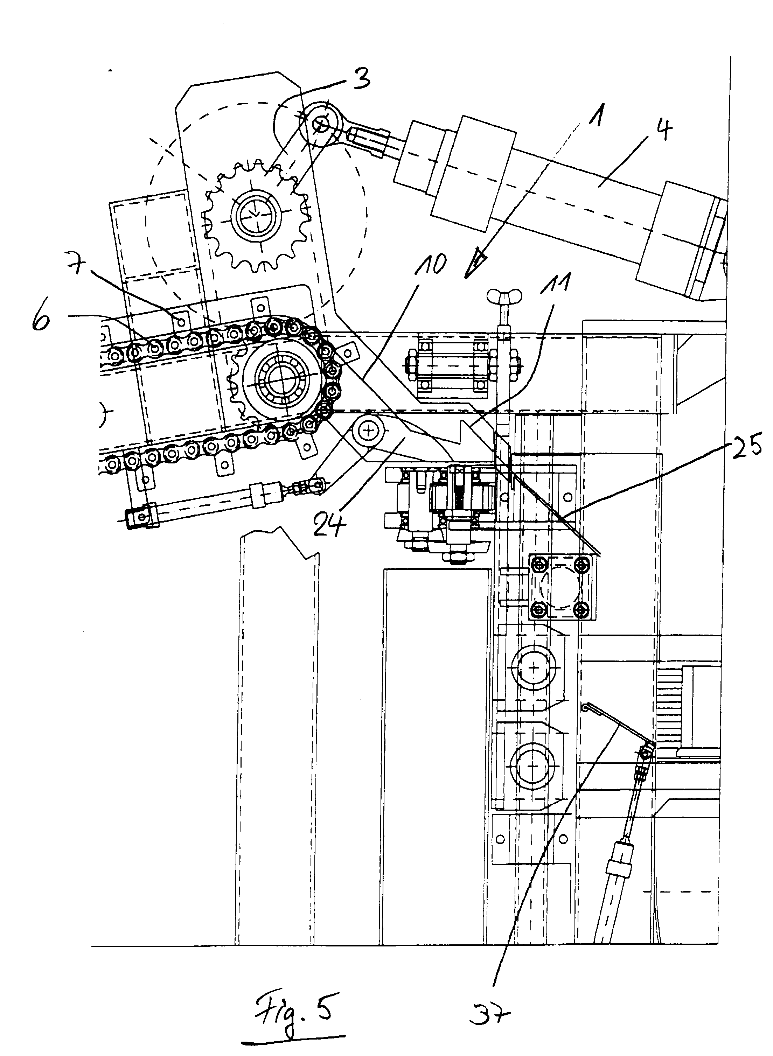

- Fig. 5: eine Seitenansicht eines Details gemäß Fig. 1,

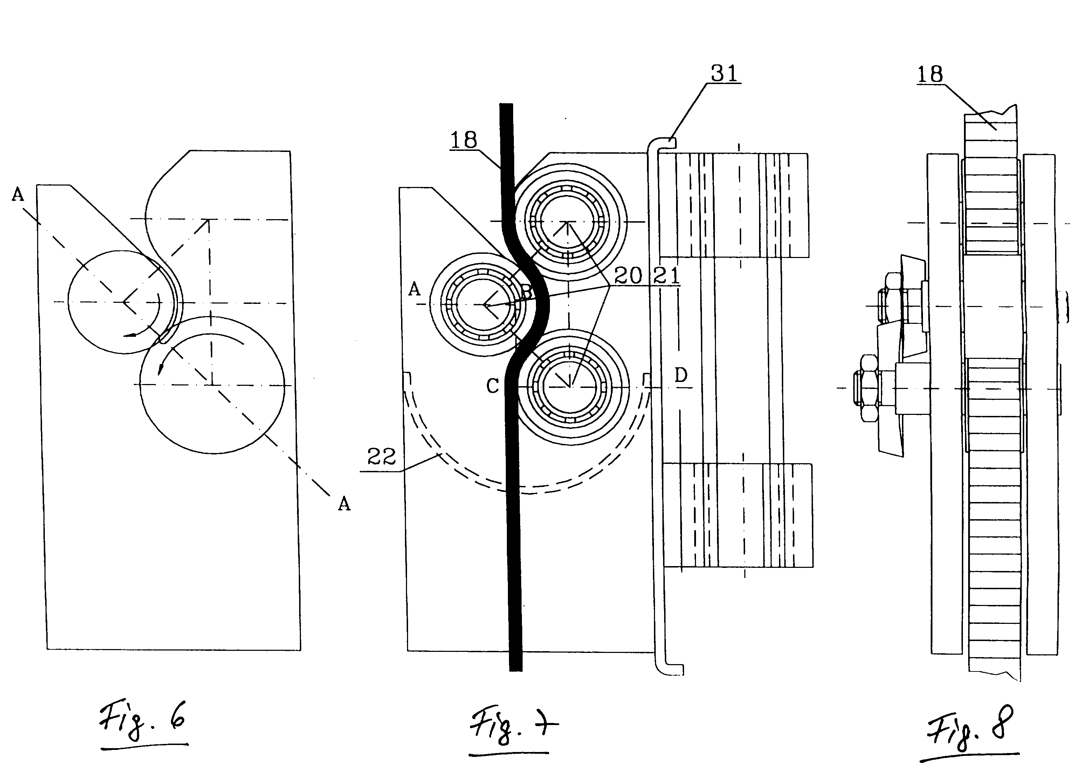

- Fig. 6: eine Unteransicht einer Schneideeinheit,
- Fig. 7: eine Draufsicht auf die Schneideeinheit gemäß Fig. 6,
- Fig. 8: eine Seitenansicht der Schneideeinheit gemäß Fig. 6,
- Fig. 9: einen Schnitt durch die Schneideeinheit entlang der Linie A - A gemäß Fig. 6,
- Fig. 10: einen Schnitt durch die Schneideeinheit entlang der Linie A - B - C - D gemäß Fig. 7.

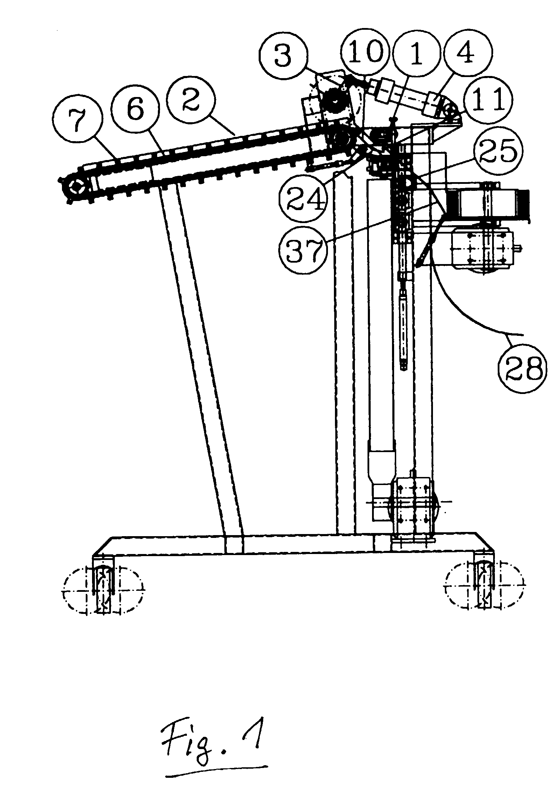

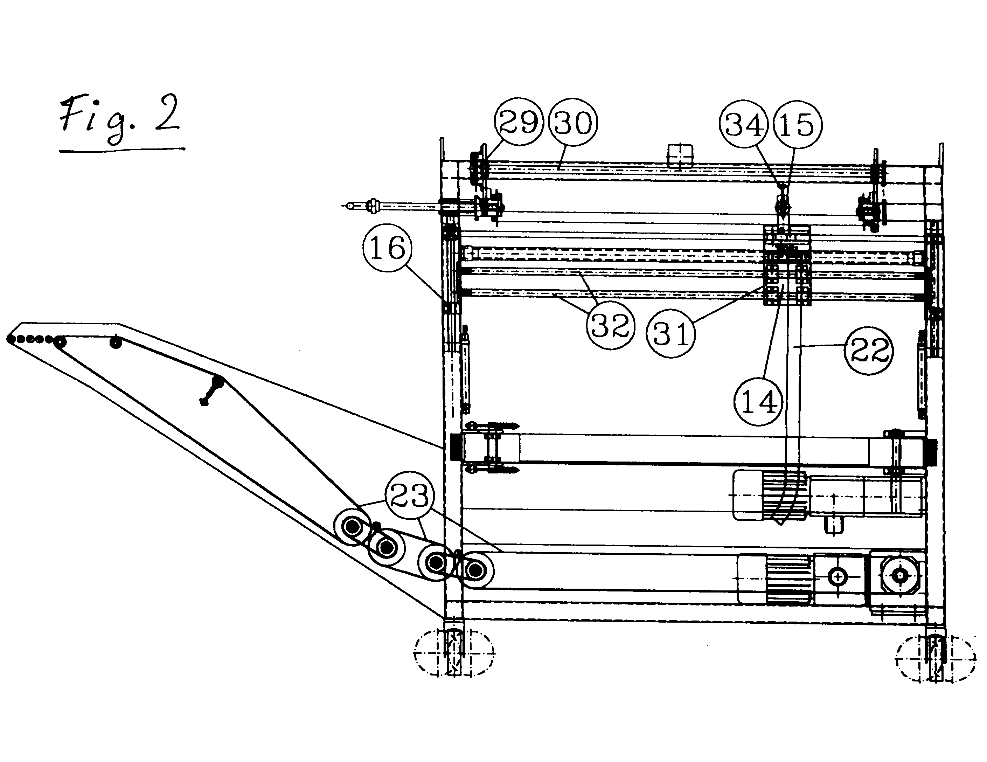

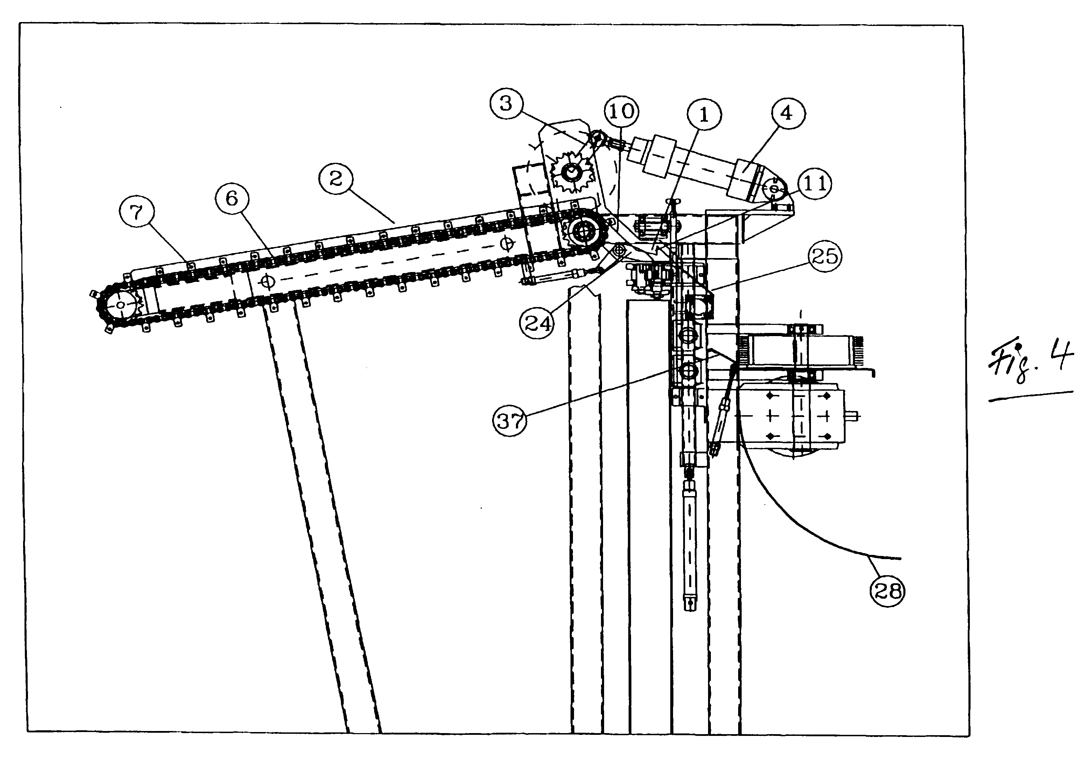

Eine Gesamtdarstellung einer automatischen Vorrichtung zum Abschneiden von Wurststrängen, die mittels Schlaufen an einem Wurststock hängen, zeigen die Figuren 1 bis 3 und 4. Die Vorrichtung arbeitet derart, daß eine vor einer Arbeitsstation 1 liegende Pufferstrecke 2 mehrere Wurststöcke aufnehmen kann und diese der Arbeitsstation nacheinander zuführt.

Die Zuführung erfolgt über einen um 90° schwenkbaren Hebel 3, angetrieben von einem Pneumatikzylinder 4 und mit einem integrierten Hülsenfreilauf 5. Die in dem Puffer befindlichen Wurststöcke rücken bei jedem Schwenk des Hebels 3 um 90° um eine Einheit weiter. Etwaige Abweichungen werden über an einem Übertragungselement (Kette 6 oder Zahnriemen) gleichmäßig angebrachte Mitnehmer 7 pneumatisch korrigiert. Auch kann ein Sensor und eine SPS-Steuerung vorgesehen sein. Vorzugsweise entspricht eine Bewegungseinheit der Wurststöcke bei Schwenk des Hebels 3 dem Abstand von Mitnehmer zu Mitnehmer 7. Anstelle des Hebels 3 kann als Antrieb für das Übertragungselement auch ein Stellmotor vorgesehen sein.

Eine Zurückbewegung der Wurststöcke wird durch nochmalige Anordnung von Hülsenfreiläufen 8 in hinteren Umlenkelementen für die Kette 6 verhindert. Die Freiläufe 5 und 8 ergänzen sich somit. Die 90°-Bewegung des Hebels 3 bzw. die Vorwärtsbewegung der Wurststöcke kann durch die an dem Übertragungselement 6 befindlichen Mitnehmer 7 - vorzugsweise Laschen - korrigiert werden.

Die Vorrichtung ermöglicht die Bearbeitung verschieden langer und auch durchgebogener Wurststöcke. Eine Seite 12 der Wurststockaufnahme ist über zwei Axialgleitbuchsen 13 verschiebbar angeordnet, damit sich der Abstand zwischen Auflagepunkten für die Wurststöcke verändern läßt. Zum Durchtrennen der Schlaufen ist eine Schneideeinheit 14 vorgesehen. Diese ist in horizontaler Ebene entlang den Wurststöcken geführt bewegbar. Zweckmäßigerweise werden die Schlaufen unmittelbar unterhalb der Wurststöcke durchtrennt. Bei durchgebogenen Wurststöcken wird die ganze Schneideeinheit 14 über eine auf dem Wurststock laufende Rolle 15 in vertikaler Richtung gelenkt und durch vertikal angeordnete Axiallager 16 geführt, so daß bei gleichmäßig lang gebundenen Schlaufen diese stets an der gleichen Stelle durchtrennt werden, unabhängig davon, ob es sich um einen geraden oder gebogenen Wurststock handelt.

In der Vorrichtung bzw. in der Arbeitsstation fährt die Schneideeinheit 14 bzw. ein zugehöriger Schneidenkopf 17 in Längsrichtung des Wurststockes knapp über die Enden der Würste und durchtrennt die Schlaufen 17a. Hierbei dient ein quer zur Zuführungsbewegung der Wurststöcke gespannter Zahnriemen 18 einerseits als Führung und reibschlüssige Halterung für die Schlaufen 17a und andererseits als feststehendes Element zum Antrieb von Rundschneiden 19 des sich vorwärtsbewegenden Schneidenkopfes 17.

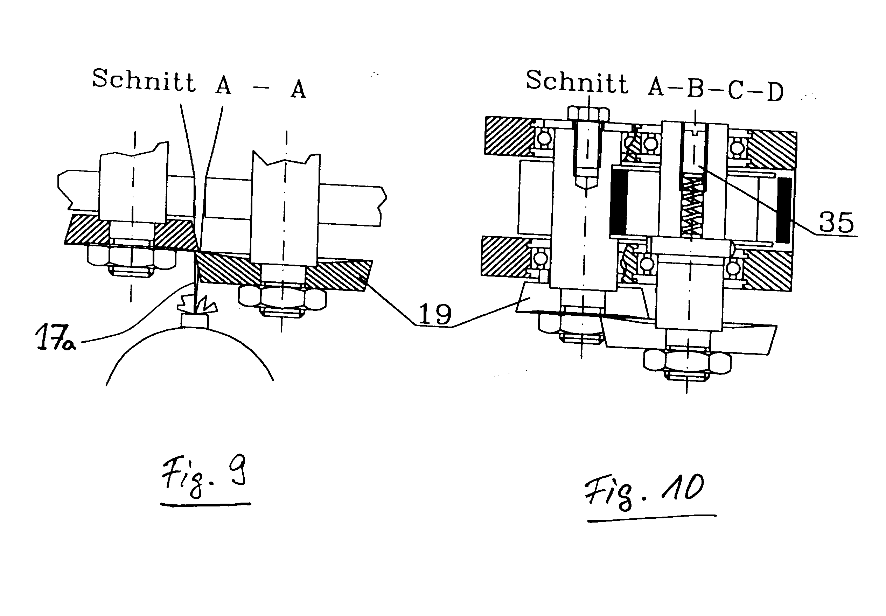

Die reibschlüssige Halterung und der Antrieb geschehen im Schneidenkopf 17 über an drei Achsen 20 angeordnete Umlenkrollen 21 und in Verbindung mit einer entsprechenden Vorspannung des Zahnriemens 18 an seinen Enden. Der Zahnriemen ist somit zumindest temporär feststehend angeordnet, während sich der Schneidenkopf 17 relativ zum Zahnriemen 18 bewegt und durch diese Vorwärtsbewegung eine Drehbewegung der Rundschneiden 19 bewirkt. Die Rundschneiden 19 überschneiden einander knapp, siehe Fig. 9. Die Umlenkrollen 21 sind zugleich Antriebsräder für die Rundschneiden 19. Die Schlaufen 17a werden in die Zahnriemenumlenkung eingezogen und somit über die Zahnriemenspannung reibschlüssig gehalten. Ein Nachlassen der Spannung im zweiten Faden - von den zwei die Schlaufe bildenden Fäden - kann so vor dem Durchtrennen des zweiten Fadens nicht eintreten.

Die drei Umlenkräder 21 sind so angeordnet, daß ein mittleres Umlenkrad den Zahnriemen leicht zwischen zwei äußere Umlenkräder drückt. Die Rundschneiden 19 sind jeweils durch die mittlere Umlenkrolle und eine der äußeren Umlenkrollen über die durchgehende Achsen 20 angetrieben.

Die abgetrennten Wurststränge fallen geführt von einem Halbrund-Hohlprofil 22 auf ein Transportband 23 und werden einer möglichen nachfolgenden Maschine oder einem Stauraum zugeführt. Der mit den Schlaufen 17a behaftete Wurststock wird aus der Arbeitsstation mittels pneumatisch angetriebener Auswurfhebel 24 ausgeworfen und über eine weitere Rutsche 25 einem Bürstenband 26 zugeführt, das die Aufgabe hat, alle restlichen Schlaufen abzustreifen und über einen Staubsaugeranschluß 27 abzugeben. Nach jedem Arbeitsgang wird auch hier pneumatisch der Weg zu einer weiteren Rutsche 28 freigemacht und der gereinigte Wurststock rutscht unkontrolliert abwärts, so daß er in einem darunter positionierten Behälter landen kann.

Die Länge des Abstands der Auflagepunkte der Wurststöcke ist einstellbar. Hierzu ist eine Seite 12 der Wurststockaufnahme über zwei Axialgleitbuchsen 13 verschiebbar angeordnet. Auch ist ein Antriebselement 29 (für das Übertragungselement 6), sei es Zahnriemenscheibe oder Kettenritzel, auf der Antriebswelle 30 mit Nut und Feder verschiebbar angeordnet.

Wie oben bereits angegeben, können auch durchgebogene Wurststöcke bearbeitet werden. Schneidenkopf 17, ein Schlitten 31 hierfür und Führungsstangen 32 zur Durchführung einer Horizontalbewegung des letzteren, die Vertikalführung 16 und die Zahnriemenkonstruktion sind als Einheit vertikal bewegbar angeordnet. Die Einheit wird über eine auf der Kontur des Wurststockes entlanglaufende Rolle 15 in vertikaler Richtung angepaßt. Auch ist die Schnitthöhe (Abstand der Rundschneiden 19 zum Wurststock) über eine Einstellschraube 34 einstellbar.

Die Rundschneiden 19 werden durch Federdruck aufeinander gepreßt. Der Druck ist durch ein Einstellorgan veränderbar, siehe Schraube 35 in Fig. 10.

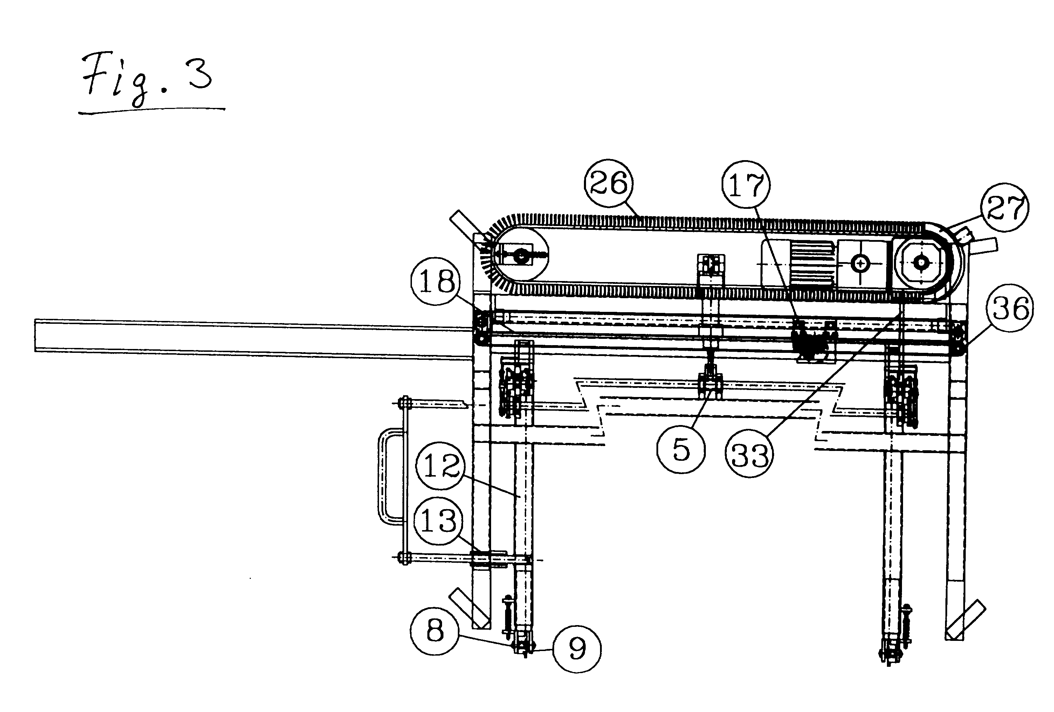

Zahnriemen 18 und Schneidenkopf 17 sind mit einem Freilauf versehen, so daß beim Rückhub des Schneidenkopfes 17 die Schneiden nicht in Drehbewegung sind. Auch kann der Zahnriemen endlos umlaufend ausgeführt sein, siehe Fig. 3. Ein Freilauf 36 im Bereich einer Umlenkung bewirkt dann, daß der Zahnriemen 18 beim Rückhub der Schneiden mit diesen mitbewegt wird und nur beim eigentlichen Schneidhub stillsteht, so daß eine Relativbewegung zwischen Zahnriemen und Schneidenkopf möglich ist.

Als Antrieb für den Schneidenkopf 17 kann ein nicht gezeigter pneumatischer, hydraulischer oder elektrischer Linearantrieb vorgesehen sein. Dieser bewegt den Schneidenkopf 17 entlang dem Zahnriemen 18.

Wie bereits ausgeführt, werden die Schlaufen abgebürstet bzw. abgesaugt. Hierzu ist ein Reinigungsbürstenband 26 vorgesehen, siehe insbesondere Fig. 3, das entlang des jeweils zu bearbeitenden Wurststockes verläuft. Das Bürstenband bzw. die Bürste weisen sehr starke Borsten auf, die die Schlaufen 17a abstreifen sollen. Der Wurststock wird frei durch die Schwerkraft über eine schräge Fläche 37 an die Bürste angedrückt. In Bewegungsrichtung des Bürstenbandes ist ein Anschlag 33 vorgesehen, der das Wegbewegen des Wurststockes verhindert. Das Absaugformteil 27 ist so gestaltet, daß es die Bürste an der nachfolgenden Umlenkung großflächig umschließt und einen Anschlußstutzen für einen Staubsaugerschlauch aufweist.

### Bezuaszeichenliste:

- 1: Arbeitsstation
- 2: Pufferstrecke
- 3: Hebel
- 4: Pneumatikzylinder
- 5: Hülsenfreilauf
- 6: Kette
- 7: Mitnehmer
- 8: Hülsenfreilauf
- 9: Umlenkelement
- 10: Kante
- 11: Anschlag
- 12: Seite
- 13: Axialgleitbuchse
- 14: Schneideeinheit
- 15: Rolle
- 16: Axiallager
- 17: Schneidenkopf
- 17a: Schlaufe
- 18: Zahnriemen
- 19: Rundschere
- 20: Achsen
- 21: Umlenkrollen
- 22: Halbrund-Hohlprofil
- 23: Transportband
- 24: Auswurfhebel
- 25: Rutsche
- 26: Bürstenband
- 27: Staubsaugeranschluß
- 28: Rutsche
- 29: Antriebselement
- 30: Antriebswelle
- 31: Schlitten
- 32: Führungsstangen
- 33: Anschlag
- 34: Einstellschraube
- 35: Schraube
- 36: Freilauf
- 37: schräge Fläche

## Patentansprüche

1. Vorrichtung mit einer Schneidvorrichtung zum Abschneiden von Wurststrängen, die mittels Schlaufen (17a) an einem Wurststock hängen.

2. Vorrichtung nach Anspruch 1, dadurch gekennzeichnet, daß die abgetrennten Schlaufen (17a) abgesaugt oder abgebürstet werden.

3. Vorrichtung nach mindestens einem der voranstehenden Ansprüche, gekennzeichnet durch Mittel zum Abtransportieren der abgetrennten Wurststränge, insbesondere ein Transportband (23).

4. Vorrichtung nach mindestens einem der voranstehenden Ansprüche, dadurch gekennzeichnet, daß die Schneidvorrichtung eine Schneideeinheit (14) - insbesondere einen Schneidenkopf (17) - aufweist, mit drehenden Schneiden (19), wobei vorzugsweise eine Vorwärtsbewegung des Schneidenkopfes (17) eine Drehbewegung der Schneiden (19) bewirkt.

5. Vorrichtung nach Anspruch 4, dadurch gekennzeichnet, daß die Schneideeinheit mit Umlenk- bzw. Antriebsrädern (21) und drehenden Messern (Rundschneiden 19) versehen ist, wobei zwischen den Rädern (21) ein Zahnriemen (18) durchläuft und mittelbar die Messer (19) drehend antreibt, insbesondere derart, daß eine Drehung der Räder (21) aufgrund einer Relativbewegung des Zahnriemens (18) eine Drehung der Messer (19) bewirkt.

6. Vorrichtung nach Anspruch 5, dadurch gekennzeichnet, daß die Wurstschlaufen (17a) beim Schneidvorgang in eine Zahnriemenumlenkung eingezogen sind, insbesondere zwischen der keine Zähne aufweisenden Seite des Zahnriemens (18) und einem mittleren von drei Umlenkrädern (21).

7. Vorrichtung nach mindestens einem der voranstehenden Ansprüche, dadurch gekennzeichnet, daß eine Schneideeinheit entlang der Wurststöcke zum Durchtrennen der Schlaufen (17a) bewegbar ist und daß die Schneideeinheit zum Ausgleich von Höhendifferenzen - etwa durch durchhängende Wurststöcke-insbesondere auch vertikal bewegbar ist.

8. Vorrichtung nach Anspruch 7, dadurch gekennzeichnet, daß die relative Höhe der Schneideeinheit über ein auf der Kontur des Wurststockes laufendes Tastorgan - insbesondere eine Rolle (15) - einstellbar ist.

9. Vorrichtung nach mindestens einem der voranstehenden Ansprüche, dadurch gekennzeichnet, daß die Wurststöcke der Schneidvorrichtung entlang einer Pufferstrecke (2) zugeführt werden, insbesondere quer zur Längsrichtung der Wurststöcke, wobei die Wurststöcke vorzugsweise von Mitnehmern (7) an einem Kraftübertragungselement (6) in Richtung auf die Schneidvorrichtung mitgenommen werden.

10. Vorrichtung nach Anspruch 9, dadurch gekennzeichnet, daß dem Kraftübertragungselement (6) ein Betätigungsorgan zugeordnet ist, das das Kraftübertragungselement mit jeder Betätigung um eine Einheit bzw. einen Mitnehmer (7) weiterbewegt.
